# EUROPEAN PATENT APPLICATION

(11) **EP 2 832 461 A1**
(43) Date of publication of application: **04.02.2015**
(21) Application number: 14179123.6
(22) Date of filing: 30.07.2014
(51) Int. Cl.: B08B 7/00, B08B 15/02

(54) **Work cabinet and sheet**

(30) Priority: 31.07.2013 JP 2013158679
(71) Applicant: Kabushiki Kaisha Yaskawa Denki, Kitakyushu-shi, Fukuoka 806-0004 (JP)
(72) Inventor: Yoshida, Osamu, Kitakyushu-shi, Fukuoka 806-0004 (JP)
(74) Representative: Viering, Jentschura & Partner Patent- und Rechtsanwälte

(57) **Abstract**

A work cabinet (2) includes a casing (10), an airflow adjuster (13), and a conveyer(15). The airflow adjuster is configured to adjust an airflow in an inner space (11) of the casing. The conveyer is disposed in the casing and configured to convey a longitudinally continuous sheet (SS) so as to make the sheet pass below the inner space. The sheet comprises an absorbent sheet comprising a water absorbing material.

## Description

### BACKGROUND

### FIELD OF THE INVENTION

The present invention relates to a work cabinet and a sheet.

### DISCUSSION OF THE BACKGROUND

Japanese Unexamined Patent Application Publication 2006-162174 describes a clean bench for adjusting chemicals. The clean bench includes a clean bench body, a work opening, and a transparent opening-closing body. The clean bench body includes a work table and a case covering work space on the upper side of the work table. The work opening is formed in the case. The transparent opening-closing body is capable of opening and closing the work opening.

The contents of Japanese Unexamined Patent Application Publication 2006-162174 are incorporated herein by reference in their entirety.

Some work cabinets such as clean benches and safety cabinets use sheets of water absorbing material or another material so as to capture droplets of chemical solution, spills of chemical solution, and similar occurrences at the time of, for example, adjusting chemicals. The sheet is placed on, for example, the work table when in use, and is discharged after use. Generally, the sheet is replaced by an operator through the work opening. However, the sheet after use might contain toxic substances such as chemical solutions, and it is necessary to eliminate or minimize spread of contamination and to improve safety at the time of replacing the sheet.

The present disclosure has been made in view of the above-described circumstances, and it is an object of the present invention to provide a work cabinet and a sheet used in the work cabinet that eliminate or minimize spread of contamination and improve safety at the time of replacing the sheet.

### SUMMARY

According to an aspect of the present disclosure, a work cabinet includes a casing, an airflow adjuster, and a conveyer. The airflow adjuster is configured to adjust an airflow in an inner space of the casing. The conveyer is disposed in the casing and configured to convey a longitudinally continuous sheet so as to make the sheet pass below the inner space.

According to another aspect of the present disclosure, a sheet is configured to be wound into a roll to be mounted to the above-described work cabinet.

The present disclosure eliminates or minimizes spread of contamination and improves safety at the time of replacing the sheet.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic front view of an overall configuration of an adjustment system according to a first embodiment;
FIG. 2 is a schematic vertical cross-sectional view taken along II-II' shown in FIG. 1;
FIG. 3 is a schematic plan view of a cabinet through a ceiling;
FIG. 4 is a schematic diagram illustrating an inner configuration of a bottom through a door of the bottom;
FIG. 5 is a schematic diagram for describing a drive device;
FIG. 6 is a flowchart of an exemplary flow of work performed in the first embodiment;
FIG. 7 is a schematic diagram illustrating an inner configuration of the bottom through the door of the bottom according to a modification in which the collection roll is rotated using a manual handle;
FIG. 8 is a schematic diagram for describing a drive device; and
FIG. 9 is a schematic front view of an overall configuration of an adjustment system according to a second embodiment.

### DESCRIPTION OF THE EMBODIMENTS

Embodiments will be described below by referring to the drawings. Where a figure has any of the notations "front", "rear", "left", "right", "upper", and "lower", these notations respectively denote "front", "rear", "left", "right", "upper", and "lower" mentioned in the specification. It is noted, however, that the positional relationship between the work cabinet and the sheet will not be limited to the concept of "front", "rear", "left", "right", "upper", and "lower".

### (1) First Embodiment

First of all, a first embodiment will be described. This embodiment is an example where an operator performs work of adjusting chemicals (which include: injection drugs such as infusion solutions and anticancer drugs; oral medicines; external medicines; agricultural chemicals; gunpowder; and reagents).

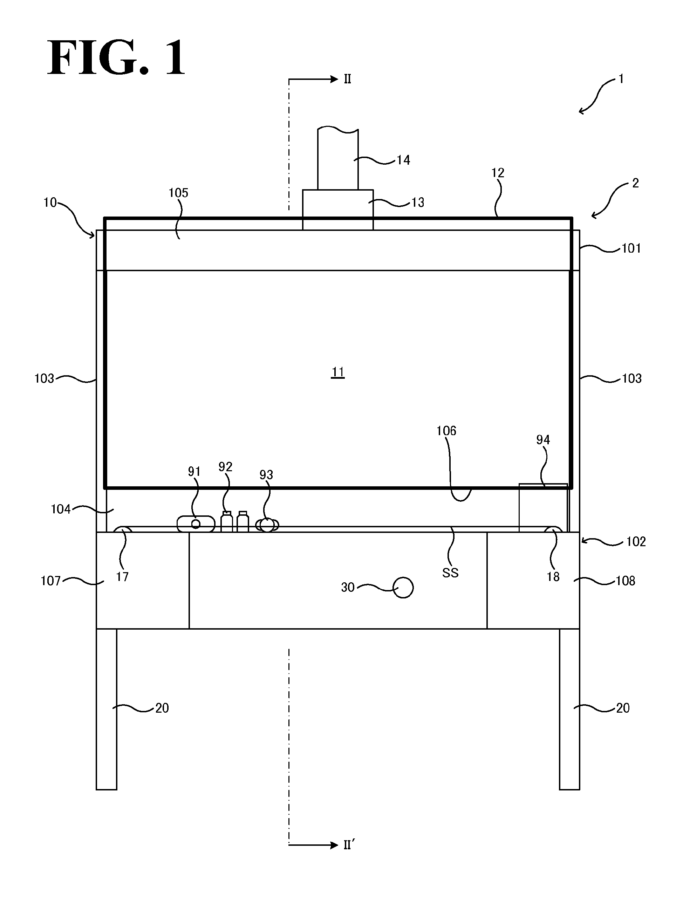

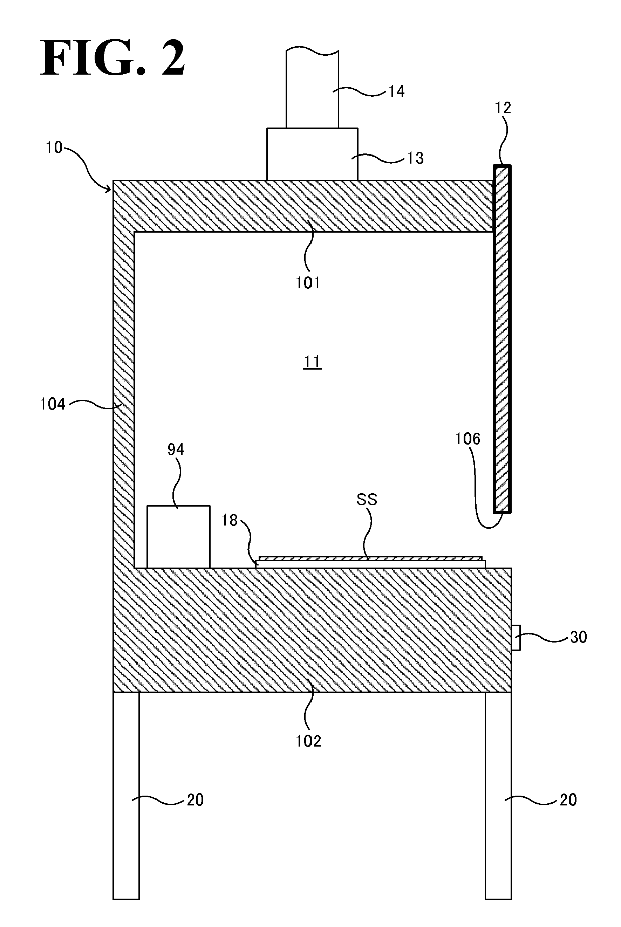

As shown in FIGs. 1 to 3, an adjustment system 1 according to this embodiment includes a cabinet 2 (work cabinet), in which adjusting work can be performed. The cabinet 2 includes a casing 10, legs 20, and a fan 13. The legs 20 are respectively disposed at front left, rear left, front right, and rear right portions on the lower side of the casing 10 to support the casing 10. The fan 13 (airflow adjuster, which will be described in detail later) adjusts the airflow in an inner space 11 of the casing 10. There is no particular limitation to the cabinet 2 insofar as adjusting work can be performed inside the cabinet 2, and the cabinet 2 includes the fan 13. Examples that are usable include a draft chamber, a clean bench, a safety cabinet, and an isolator. For the sake of description, the following description will take a safety cabinet as an example of the cabinet 2.

The casing 10 has an approximately rectangular parallelepiped shape, and adjusting work is performed in the inner space 11 of the approximately rectangular parallelepiped shape. The casing 10 will not be limited to the approximately rectangular parallelepiped shape, and may have a shape other than the rectangular parallelepiped shape (examples including an approximately cubic shape and an approximately column shape).

The casing 10 includes a ceiling 101, a bottom 102, wall portions 103, and a wall portion 104. The ceiling 101 is positioned on the upper side of the inner space 11. The bottom 102 is positioned on the lower side of the inner space 11. The wall portions 103 are positioned on the left and the right sides of the inner space 11. The wall portion 104 is positioned on the rear side of the inner space 11. A left wall surface (not shown), a right wall surface (not shown), a front wall surface 105 (wall surface), and a rear wall surface (not shown) are respectively positioned on the left, right, front, and rear sides of the casing 10. An opening 106 is formed on the front wall surface 105 among the foregoing surfaces. The opening 106 will not be limited to the case of being formed on the front wall surface 105, and may be formed on a wall surface other than the front wall surface 105 (examples including the left wall surface, the right wall surface, and the rear wall surface).

The opening 106 has an approximately rectangular shape, and a door 12, which is capable of opening and closing the opening 106, is mounted to the position where the opening 106 is formed. The opening 106 will not be limited to the approximately rectangular shape, and may have a shape other than the approximately rectangular shape (examples including an approximately square shape and an approximately circular shape). The door 12 is made of a material (such as glass) that is transparent enough to enable the operator to visually check the inside of the casing 10 from the outside of the casing 10 through the door 12. The door 12 is movable upward and downward; when the door 12 moves downward, the opening 106 is closed, while when the door 12 moves upward, the opening 106 is opened. The door 12 will not be limited to a door that is movable upward and downward, and may be any other door capable of opening and closing the opening 106. In order to perform adjusting work in the inner space 11, the operator slightly moves the door 12 upward to slightly open the opening 106, and puts the operator's arm into the casing 10 through the opening 106.

The ceiling 101 is provided with the fan 13. The fan 13 will not be limited to the case of being provided on the ceiling 101, and may be provided at a position other than the ceiling 101 (examples including the wall portion 103 and the wall portion 104). In this embodiment, where the cabinet 2 is a safety cabinet, such a fan is used as the fan 13 that intakes the air in the inner space 11, cleans the air through a HEPA (High Efficiency Particulate Air) filter, and discharges the air outdoors or to another outside place through a discharge duct 14, thereby maintaining the inner space 11 under a negative pressure with respect to the outside of the casing 10. When the cabinet 2 is not a safety cabinet, such a fan may be used as the fan 13 that maintains the inner space 11 under a positive pressure (positive pressure) with respect to the outside of the casing 10, or that only adjusts the airflow in the inner space 11, without the function of adjusting the pressure.

The bottom 102 has an upper surface serving as a work table. On the upper surface of the bottom 102, a chemical container (examples including an infusion solution bag, a vial, and an ample), tools (examples including a syringe, an injection needle, and a waste container), and other items that are used for the adjusting work are placed. FIGs. 1 to 3 show a state in which an infusion solution bag 91, two vials 92, a syringe 93, and a waste container 94 are placed on the upper surface of the bottom 102.

Doors 107 and 108 are respectively disposed on left and right ends of the front surface of the bottom 102. The door 107 opens and closes a supply cartridge mounting portion 109, described later. The door 108 opens and closes a collection cartridge mounting portion 110, described later.

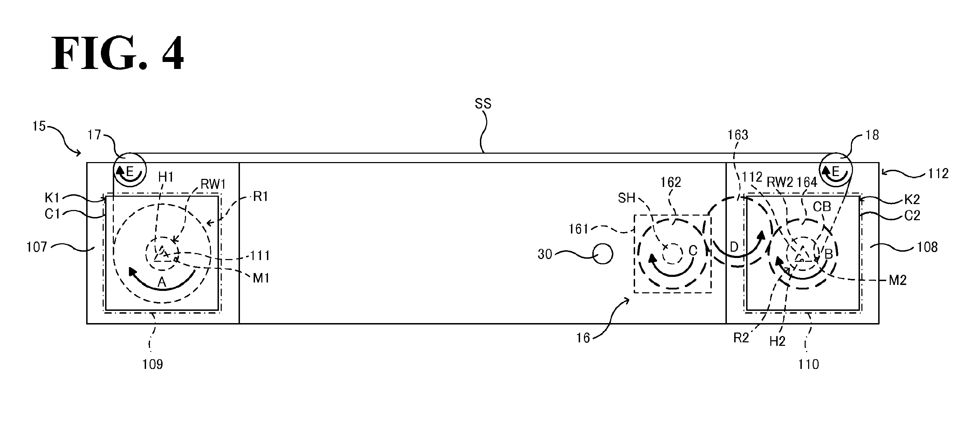

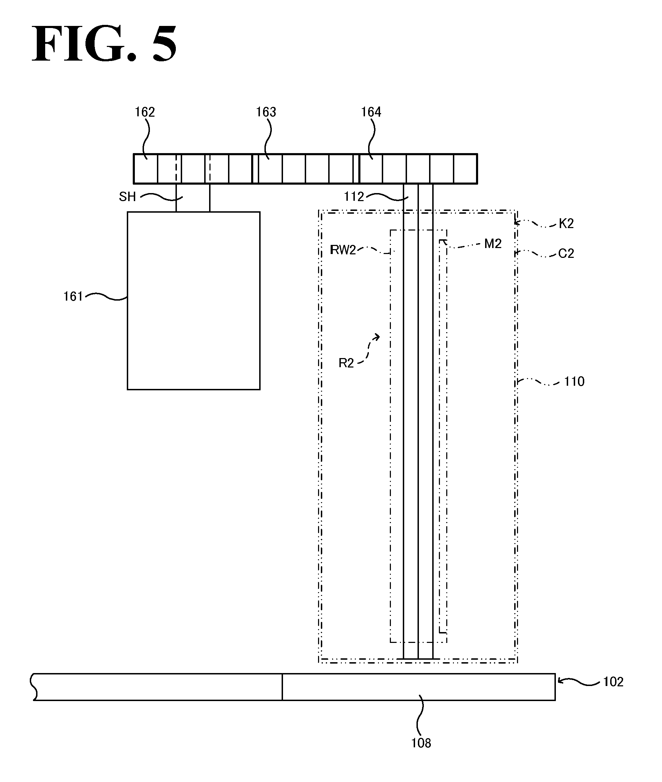

As shown in FIGs. 4 and 5, the bottom 102 incorporates the supply cartridge mounting portion 109 (first roll attached-detached portion), the collection cartridge mounting portion 110 (second roll attached-detached portion), and a conveyer 15.

A supply cartridge K1 (specifically, a case C1 described later) is mounted to or detached from the supply cartridge mounting portion 109. The supply cartridge mounting portion 109 is provided with a rotatably supported rotation shaft 111. The rotation shaft 111 has an approximately triangular shape in front view. A fitting hole H1, described later, is fitted with the rotation shaft 111. The rotation shaft 111 will not be limited to the approximately triangular shape in front view, and may have any other shape that can be fitted with the fitting hole H1, described later (examples including a shape of an approximately column member provided with a protrusion or a similar object on the outer circumferential surface of the approximately column member).

The supply cartridge K1 includes the case C1 and a supply roll R1. The case C1 defines the outline of the supply cartridge K1. The supply roll R1 is accommodated in the case C1. In this embodiment, the case C1 has an attachable and detachable portion that becomes the front surface of the case C1 when the case C1 is in a state of being mounted to the supply cartridge mounting portion 109.

The supply roll R1 is formed by winding around a roll core RW1 a longitudinally continuous (web shaped) sheet SS (see also FIGs. 1 to 3), which is used in the casing 10. In other words, the sheet SS is mounted to the cabinet 2 in a state of being wound into a roll. In this embodiment, where adjusting work is performed in the inner space 11, an absorbent sheet containing a water absorbing material is used as the sheet SS to capture droplets of chemical solution, spills of chemical solution, and similar occurrences at the time of the work. An engagement member CB (described in detail later) is disposed at a distal end of the sheet SS. The fitting hole H1 is formed in a center portion of the roll core RW1. The fitting hole H1 has an approximately triangular shape in front view, and is fitted with the rotation shaft 111. The fitting hole H1 will not be limited to the approximately triangular shape in front view, and may have any shape that can be fitted with the rotation shaft 111. By fitting the fitting hole H1 with the rotation shaft 111, the supply cartridge K1 is mounted to the supply cartridge mounting portion 109. A groove M1 is formed on the outer circumferential surface of the roll core RW1. When the used supply cartridge K1 is reused as the collection cartridge K2 as described later, the engagement member CB at the distal end of the sheet SS drawn out from the supply roll R1 of a new supply cartridge K1 is mounted to or detached from the groove M1. That is, the groove M1 serves no particular purpose while the supply cartridge K1 is mounted to the supply cartridge mounting portion 109. Such a configuration is also possible that an engagement member CB is disposed on a base end of the sheet SS of the supply roll R1 so that this engagement member CB is engaged with the groove M1 in advance.

The supply roll R1 described above rotates together with the rotation shaft 111 in a predetermined rotation direction A (which is clockwise in FIG. 4 and will be hereinafter referred to as "arrow A direction" where convenient) with the supply cartridge K1 mounted to the supply cartridge mounting portion 109. In this manner, the sheet SS is drawn out (supplied). The sheet SS drawn out from the supply roll R1, that is, the sheet SS drawn out from the supply roll R1 by the conveyer 15 as described later, is conveyed below the inner space 11, that is, over the bottom 102, in a direction crossing the opening 106, that is, from left to right, thus making the sheet SS pass over the bottom 102.

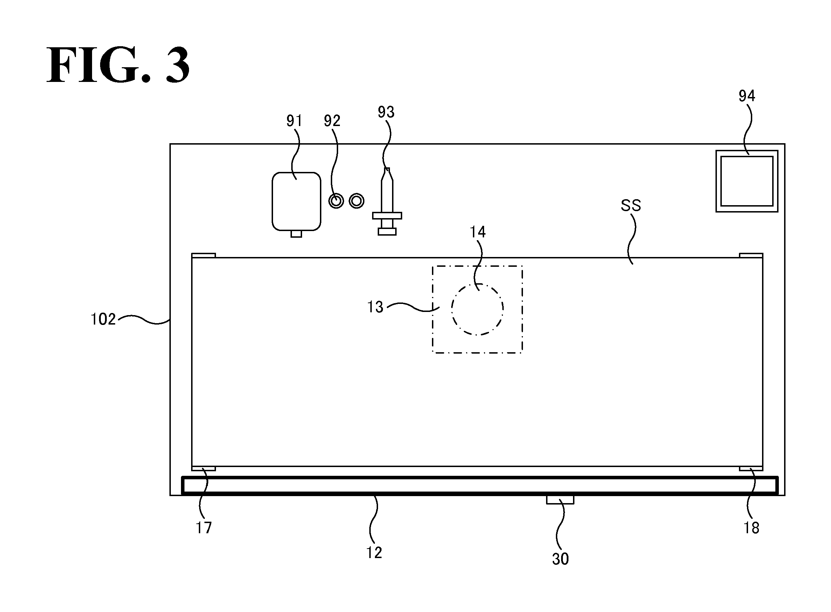

In this embodiment, the sheet SS has a smaller size in the direction orthogonal to the conveyance direction of the sheet SS, that is, the front and rear direction, than the size of the upper surface of the bottom 102 in the front and rear direction. This ensures space in which the chemical container, tools, and other items are placed at a rear portion of the upper surface of the bottom 102 (see FIG. 3). Thus, when the sheet SS is conveyed, it is not necessary to put away the chemical container, tools, and other items to positions where these items do not interfere with the conveyance of the sheet SS. This ensures quick start of the work of conveying the sheet SS. It is also possible to make the size of the sheet SS in the front and rear direction approximately the same as the size of the upper surface of the bottom 102 in the front and rear direction.

A collection cartridge K2 (specifically, a case C2 described later) is mounted to or detached from the collection cartridge mounting portion 110. The collection cartridge mounting portion 110 is provided with a rotatably supported driving shaft 112. The driving shaft 112 has an approximately triangular shape in front view. A fitting hole H2, described later, is fitted with the driving shaft 112. The driving shaft 112 will not be limited to the approximately triangular shape in front view, and may have any other shape that can be fitted with the fitting hole H2, described later (examples including a shape of an approximately column member provided with a protrusion or a similar object on the outer circumferential surface of the approximately column member).

The collection cartridge K2 includes the case C2 and a collection roll R2. The case C2 defines the outline of the collection cartridge K2. The collection roll R2 is accommodated in the case C2. In this embodiment, the case C2 has an attachable and detachable portion that becomes the front surface of the case C2 when the case C2 is in a state of being mounted to the collection cartridge mounting portion 110.

The collection roll R2 is formed by winding around a roll core RW2 (roll core for winding) the sheet SS that has passed over the bottom 102. A fitting hole H2 is formed in a center portion of the roll core RW2. The fitting hole H2 has an approximately triangular shape in front view, and is fitted with the driving shaft 112. The fitting hole H2 will not be limited to the approximately triangular shape in front view, and may have any shape that can be fitted with the driving shaft 112. By fitting the driving shaft 112 with the fitting hole H2, the collection cartridge K2 is mounted to the collection cartridge mounting portion 110. A groove M2 is formed on the outer circumferential surface of the roll core RW2. The engagement member CB at the distal end of the sheet SS drawn out from the supply roll R1, as described above, is mounted to or detached from the groove M2. Specifically, when the work of mounting the cartridges K1 and K2 is performed, the engagement member CB at the distal end of the sheet SS drawn out from the supply roll R1 is engaged with the groove M2 of the roll core RW2 of the collection roll R2.

The collection roll R2 described above rotates together with the driving shaft 112 in a predetermined rotation direction B (which is clockwise in FIG. 4 and will be hereinafter referred to as "arrow B direction" where convenient) with the collection cartridge K2 mounted to the collection cartridge mounting portion 110. In this manner, the sheet SS that has passed over the bottom 102 is wound (collected).

In this embodiment, an only difference between the cartridges K1 and K2 is which cartridge supplies or collects the sheet SS; otherwise, the cartridges K1 and K2 are similar to each other in the configurations of the roll cores RW1 and RW2 and other elements. The used supply cartridge K1 (with the sheet SS wound around the roll core R1 being used up) is reusable as the collection cartridge K2. The cartridges K1 and K2 may have different configurations, and the used supply cartridge K1 may not be reusable as the collection cartridge K2.

The conveyer 15 draws out the sheet SS from the supply roll R1, conveys the drawn sheet SS from left to right over the bottom 102, thus making the sheet SS pass over the bottom 102, and winds the sheet SS that has passed over the bottom 102 around the collection roll R2. The conveyer 15 includes a drive device 16 and rotatably supported conveyance rollers 17 and 18 (see also FIGs. 1 to 3).

The drive device 16 rotates the collection roll R2 in the arrow B direction. The drive device 16 includes a motor 161 and three gears 162, 163, and 164.

The motor 161 includes a rotation shaft SH incorporated in the bottom 102, and rotates the rotation shaft SH in a predetermined rotation direction C (which is clockwise in FIG. 4 and will be hereinafter referred to as "arrow C direction" where convenient) to output rotation force. On the front surface of the bottom 102, a button 30 (see also FIGs. 1 to 3) is disposed to drive the motor 161. The motor 161 is driven upon pressing of the button 30. The gear 162 is coupled to the rotation shaft SH and is rotated in the arrow C direction by the rotation of the rotation shaft SH. The gear 163 meshes with the gear 162, and is rotated by the rotation of the gear 162 in a predetermined rotation direction D (which is anticlockwise in FIG. 4 and will be hereinafter referred to as "arrow D direction" where convenient). The gear 164 meshes with the gear 163, and is rotated by the rotation of the gear 163 in the arrow B direction. The gear 164 is coupled with the driving shaft 112. Thus, the driving shaft 112 rotated in the arrow B direction by the rotation of the gear 164.

In the drive device 16, when the operator presses the button 30, the motor 161 is driven to rotate the rotation shaft SH in the arrow C direction, and the rotation force thus generated is transmitted to the driving shaft 112 through the gears 162, 163, and 164. This rotates the supply roll R2 in the arrow B direction, which in turn rotates the driving shaft 112 in the arrow B direction. The drive device 16 will not be limited to the above-described configuration; any other configuration is possible insofar as the device is capable of rotating the supply roll R2.

The conveyance roller 17 is disposed on the left end side inside the bottom 102, and the outer circumferential surface of the conveyance roller 17 is partially exposed on the upper surface of the bottom 102. The conveyance roller 18 is disposed on the right end side inside the bottom 102, and the outer circumferential surface of the conveyance roller 18 is partially exposed on the upper surface of the bottom 102. The conveyance rollers 17 and 18 each rotate in a predetermined rotation direction E (which is clockwise in FIG. 4 and will be hereinafter referred to as "arrow E direction" where convenient). Thus, the sheet SS drawn out from the supply roll R1 is conveyed from left to right over the bottom 102 with the width direction of the sheet SS being oriented in the front and rear direction.

In the conveyer 15 described above, the drive device 16 rotates the collection roll R2 in the arrow B direction to draw out the sheet SS from the supply roll R1 while applying tensile force to the sheet SS. In the conveyer 15, the conveyance rollers 17 and 18 convey the sheet SS drawn out from the supply roll R1 from left to right over the bottom 102, thus making the sheet SS pass over the bottom 102. Then in the conveyer 15, the sheet SS that has passed over the bottom 102 is wound around the collection roll R2. The conveyer 15 will not be limited to the above-described configuration; any other configuration is possible insofar as the device is disposed in the casing 10 and capable of conveying the sheet SS to make the sheet SS pass below the inner space 11.

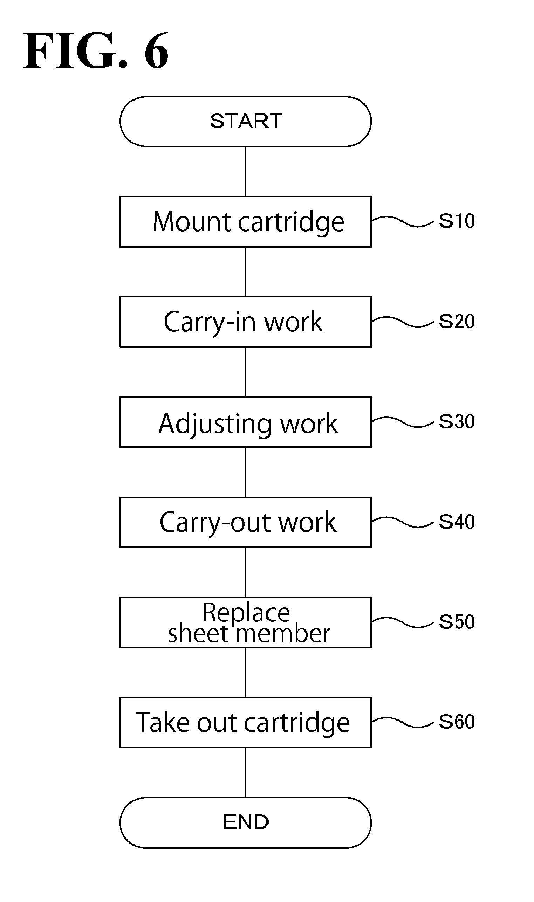

An exemplary flow of the work performed in the first embodiment will be described below by referring to FIG. 6.

As shown in FIG. 6, at step S10, the operator moves the doors 107 and 108 of the bottom 102 to open the cartridge mounting portions 109 and 110, and mounts the cartridges K1 and K2 respectively to the cartridge mounting portions 109 and 110. Specifically, the operator fits the fitting hole H1 of the roll core RW1 of the supply roll R1 of the supply cartridge K1 with the rotation shaft 111, which is provided in the supply cartridge mounting portion 109. Thus, to the supply cartridge mounting portion 109, the supply cartridge K1 is mounted with a new supply roll R1 in which the sheet SS is wound around the roll core RW1. The operator also fits the fitting hole H2 of the roll core RW2 of the collection roll R2 of the collection cartridge K2 with the driving shaft 112, which is provided in the collection cartridge mounting portion 110. Thus, to the collection cartridge mounting portion 110, the collection cartridge K2 is mounted with a new, empty collection roll R2 in which no sheet SS is wound around the roll core RW2. Then, the operator draws out the sheet SS from the supply roll R1, extends the drawn sheet SS along its conveyance path, and engages the engagement member CB, which is at the distal end of the sheet SS, with the groove M2 of the roll core RW2 of the collection roll R2. Thus, the sheet SS is in a state of being disposed over the bottom 102.

At step S20, the operator performs carry-in work. Specifically, the operator carries a chemical container in which unadjusted chemical is sealed, devices required for the adjusting work, and other items into the casing 10 through the opening 106, and places these items on the rear portion of the upper surface of the bottom 102 where the sheet SS is not disposed. It is also possible to place the chemical container, the device, and other items at a portion of the upper surface of the bottom 102 where the sheet SS is disposed, so that the sheet SS disposed in between (that is, the items may be placed on the sheet SS).

At step S30, the operator performs the adjusting work using the chemical container, tools, and other items carried in at step S20. Specifically, the operator puts the operator's arm into the casing 10 through the opening 106, and performs the adjusting work in the inner space 11 (specifically, above the sheet SS) while visually checking the inner space 11 through the door 12.

At step S40, the operator performs carry-out work of the chemical adjusted at step S30. Specifically, the operator carries out the chemical container containing the adjusted chemical and other items to the outside of the casing 10 through the opening 106.

At a desired timing (example including: when a portion of the sheet SS disposed over the bottom 102 becomes dirty; every time the adjusting work is completed; every time each procedure in single adjusting work is completed; and when all the adjusting work is completed), the operator replaces the sheet SS at step S50. Specifically, the operator presses the button 30 to make the conveyer 15 convey the sheet SS from left to right over the bottom 102, thus making the sheet SS pass over the bottom 102. Thus, the used portion of the sheet SS that has been disposed over the bottom 102 at the time of the adjusting work is wound around the collection roll R2, and an unused portion of the sheet SS drawn out from the supply roll R1 is disposed over the bottom 102.

When the sheet SS of the supply roll R1 runs out, the operator at step S60 moves the doors 107 and 108 of the bottom 102 to open the cartridge mounting portions 109 and 110, and takes out the cartridges K1 and K2 respectively from the cartridge mounting portions 109 and 110. Specifically, the operator takes out the supply cartridge K1 with the empty supply roll R1 from the supply cartridge mounting portion 109. Also, from the collection cartridge mounting portion 110, the operator takes out the collection cartridge K2 with the collection roll R2 around which the used sheet SS is wound, and subjects the taken collection cartridge K2 to discharge processing. Then, when new cartridges K1 and K2 are to be mounted respectively to the cartridges mounting portions 109 and 110, the processing proceeds to step S10, where a similar procedure is performed.

As has been described hereinbefore, the cabinet 2 according to this embodiment includes the casing 10, the fan 13, and the conveyer 15. The fan 13 adjusts the airflow in the inner space 11 of the casing 10. The conveyer 15 conveys the longitudinally continuous sheet SS to make the sheet SS pass over the bottom 102. This ensures continuous supply or discharge of the sheet SS over the bottom 102 without opening the casing 10, without the operator contacting the sheet SS, and without disturbing the airflow. This eliminates or minimizes spread of contamination and improves safety at the time of replacing the sheet SS.

It is particularly noted that in this embodiment, the casing 10 includes the front wall surface 105, in which the opening 106 for adjusting work is formed. The operator is able to perform adjusting work in the inner space 11 of the casing 10 through the opening 106. Here, the conveyer 15 conveys the sheet SS from left to right over the bottom 102. This ensures that the sheet SS can be replaced along with the adjusting work performed through the opening 106 (examples including: when a portion of the sheet SS disposed over the bottom 102 becomes dirty; every time the adjusting work is completed; every time each procedure in single adjusting work is completed; and when all the adjusting work is completed). This improves usability of the cabinet 2.

It is particularly noted that in this embodiment, the sheet SS is in a state of being wound into a roll (supply roll R1) when the sheet SS is mounted to the cabinet 2. The sheet SS is drawn out from the supply roll R1 by the conveyer 15, and the sheet SS that has passed over the bottom 102 is wound around the collection roll R2. When the sheet SS of the supply roll R1 runs out, the supply cartridge K1 with the empty supply roll R1 is taken out from the supply cartridge mounting portion 109, and replaced with a supply cartridge K1 with a new supply roll R1 around which the sheet SS is wound. Meanwhile, the collection cartridge K2 with the collection roll R2 around which the used sheet SS is wound is taken out from the collection cartridge mounting portion 110, and replaced with a collection cartridge K2 with a new empty collection roll R2. Then, the distal end of the sheet SS drawn out from the new supply roll R1 is mounted to the roll core RW2 of the collection roll R2, and the new sheet SS is conveyed. With such a configuration, in which the sheet SS in the form of a roll is supplied and collected, a significantly long sheet SS can be used. Preparing the sheet SS in the form of a roll facilitates the replacement work of the sheet SS, and facilitates handling of the sheet SS when the sheet SS is taken out from the casing 10.

It is particularly noted that in this embodiment, the conveyer 15 includes the drive device 16, which rotates the collection roll R2. The drive device 16 rotates the collection roll R2 to draw out the sheet SS from the supply roll R2 and make the sheet SS pass over the bottom 102 while applying tensile force to the sheet SS. This ensures stable conveyance of the sheet SS. When the motor 161 is used as the driving source of the drive device 16 as in this embodiment, the sheet SS can be automatically conveyed, and this improves usability for the user.

It is particularly noted that in this embodiment, the collection cartridge K2 accommodating the collection roll R2 is mounted to and detached from the collection cartridge mounting portion 110 of the casing 10. Thus, the collection roll R2 as the used sheet SS can be handled while being accommodated in the case C2 of the collection cartridge K2. This ensures effectiveness in the elimination or minimization of spread of contamination and in the improvement of safety at the time of replacing the sheet SS.

It is particularly noted that in this embodiment, the fan 13 maintains the inner space 11 of the casing 10 under a negative pressure with respect to the outside of the casing 10. This eliminates or minimizes a leakage of toxic substances to outside the casing 10 when the adjusting work in the cabinet 2 involves use of a potent toxic or potent allergic chemical.

It is particularly noted that in this embodiment, the engagement member CB is disposed at the distal end of the sheet SS to be mounted to and detached from the roll core RW2 of the collection roll R2. This facilitates mounting of the distal end of the sheet SS drawn out from the supply roll R1 to the roll core RW2 of the collection roll R2, which in turn facilitates the work of replacing the sheet SS. In this embodiment, the used collection cartridge K2 is subjected to discharge processing. When the attachment member CB is detached from the roll core RW2 in the collection roll R2 of the used collection cartridge K2, only the used portion of the sheet SS needs discharge processing. In this case, the roll core RW2 and the case C2 can be reused.

It is particularly noted that in this embodiment, an absorbent sheet containing a water absorbing material is used as the sheet SS. This ensures capture of droplets of chemical solution, spills of chemical solution, and similar occurrences at the time of adjusting work in the inner space 11 of the casing 10.

The first embodiment should not be construed in a limiting sense, and various modifications are possible without departing from the technical scope of the present invention. Such modifications will be sequentially described below.

### (1-1) Case where collection roll is rotated by manual handle

In the first embodiment described above, the motor 161 is used as the driving force of the drive device 16 to rotate the collection roll R2. This, however, should not be construed in a limiting sense. A manual handle may be used as the driving source of the drive device to rotate the collection roll R2.

The points in this modification, different from the first embodiment, and the like will be described below.

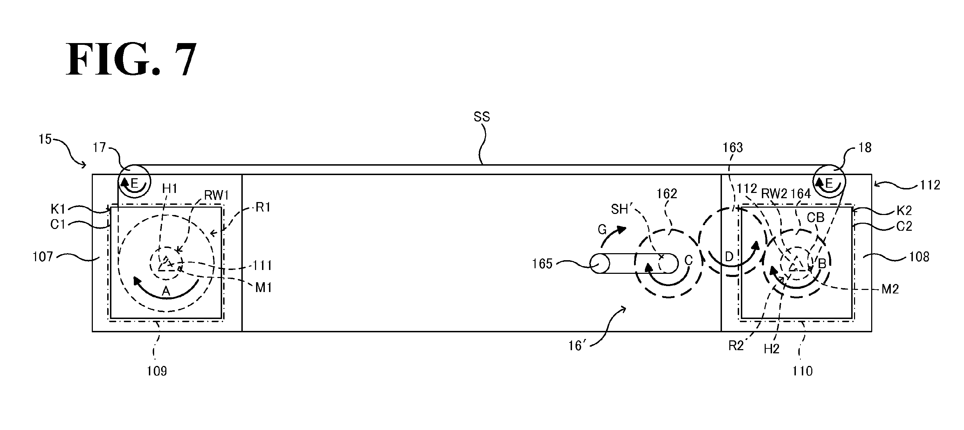

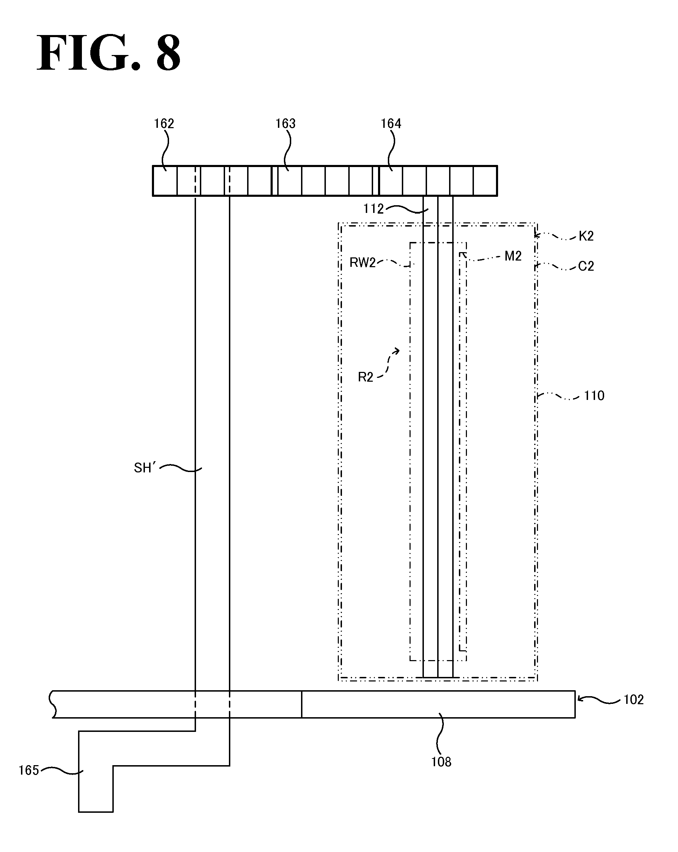

As shown in FIGs. 7 and 8, in the cabinet 2 according to this modification, no button 30 is disposed on the front surface of the bottom 102. The conveyer 15 includes a drive device 16' instead of the drive device 16. The conveyer 16' includes a manual handle 165 and gears 162, 163, and 164.

The manual handle 165 is disposed on the front surface side of the bottom 102, and is couple to one end of a rotation shaft SH' disposed in the bottom 102. When the operator rotates the manual handle 165 in a predetermined rotation direction G (which is clockwise in FIG. 7 and will be hereinafter referred to as "arrow G direction" where convenient), the rotation shaft SH' rotates in the arrow C direction to output the rotation force. The manual handle 165 will not be limited to this rotating handle; any other type of handle is possible. The gear 162 is coupled to the other end of the rotation shaft SH', and is rotated by the rotation of the rotation shaft SH' in the arrow C direction. The gears 163 and 164 are similar to the first embodiment.

In this drive device 16', when the operator rotates the manual handle 165 in the arrow G direction to rotate the rotation shaft SH' in the arrow C direction, the rotation force thus produced is transmitted to the driving shaft 112 through the gears 162, 163, and 164. Thus, the driving shaft 112 rotates in the arrow B direction to rotate the supply roll R2 in the arrow B direction.

This modification is otherwise approximately similar to the first embodiment and will not be elaborated further here.

In this modification, the conveyer 15 includes the drive device 16', which rotates the collection roll R2. The drive device 16' rotates the collection roll R2 to draw out the sheet SS from the supply roll R2 and make the sheet SS pass over the bottom 102 while applying tensile force to the sheet SS. This ensures stable conveyance of the sheet SS. When the manual handle 165 is used as the driving source of the drive device 16' as in this modification, the structure of the cabinet 2 is simplified, resulting in reduced cost.

### (1-2) Case where a robot outside the casing performs adjusting work

In the first embodiment and the modification (1-1), the operator performs adjusting work. This, however, should not be construed in a limiting sense. A robot outside the casing 10 may perform the adjusting work in place of the operator.

In this modification, the robot puts at least one robot arm, not shown, of the robot into the casing 10 through the opening 106 to perform adjusting work in the inner space 11. This ensures that the operator is more reliably protected from toxic substances and other substances used in the adjusting work, which further improves safety.

### (2) Second Embodiment

Next, a second embodiment will be described. This embodiment is regarding an example where a robot disposed in the inner space 11 of the casing 10 performs adjusting work.

The following describes those respects in which this embodiment is different from the first embodiment.

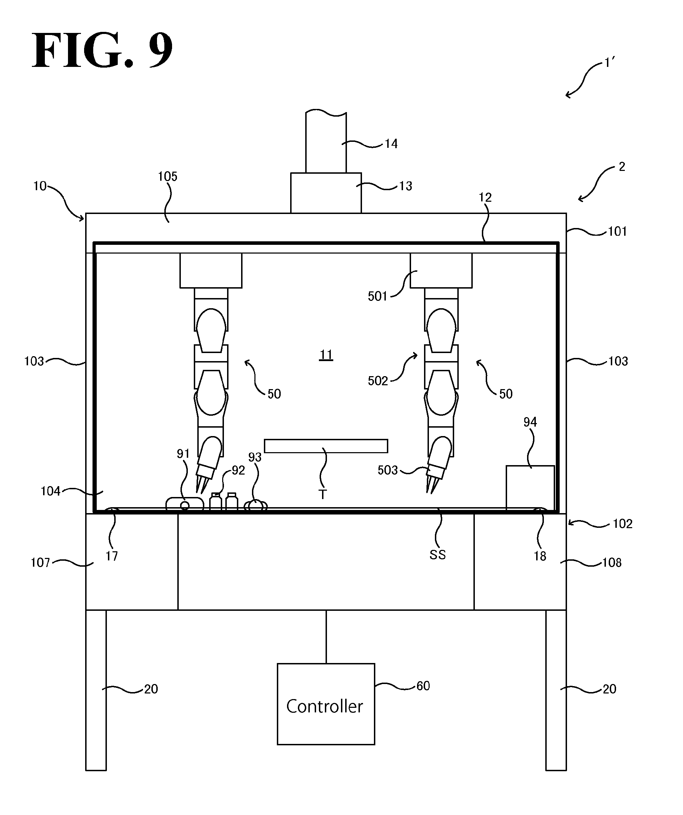

As shown in FIG. 9, an adjustment system 1' according to this embodiment includes a cabinet 2 and a controller 60. In the cabinet 2 according to this modification, no button 30 is disposed on the front surface of the bottom 102, and two robots 50 are disposed in the inner space 11 of the casing 10. The cabinet 2 will not be limited to the case where two robots 50 are disposed in the inner space 11, and one or more than three robots may be disposed in the inner space 11.

The two robots 50 have the same configuration. The two robots 50 may have different configurations. Each robot 50 is what is called a suspended robot disposed on the ceiling 101. Each robot 50 will not be limited to a suspended robot; other possible robots include a robot disposed on the bottom 102 and a robot disposed on the wall portion 103 or 104. Each of these robots 50 includes a base 501 secured on the ceiling 101 and one robot arm 502 rotatably disposed on the base 501, and performs adjusting work in the inner space 11 using the robot arm 502. Each robot 50 may not necessarily include one robot arm 502 but may include equal to or more than two robot arms 502.

The robot arm 502 includes a plurality of joints from the base 501 side to its opposite side, that is, to the distal end side of the robot arm 502. The robot arm 502 incorporates a plurality of servo motors (not shown) that respectively drive the plurality of joints. A holding device 503, which is capable of holding the chemical container, tools, and other items placed on the upper surface of the bottom 102, is disposed on the distal end of the robot arm 502.

There is no particular limitation to the holding device 503 insofar as the device is capable of holding the chemical container, tools, and other items. Examples of the holding device 103 include a gripper device capable of gripping the chemical container, tools, and other items using finger members, and a suction device capable of sucking the chemical container, tools, and other items by driving the suction device using pneumatic or electromagnetic force. In this example, a gripper device is employed as the holding device 503. The holding device 503 is driven by an incorporated suitable actuator (not shown).

In this embodiment, in the inner space 11 of the casing 10, specifically, in the movable range of the robot arm 502 of at least one of the robots 50, a table T is disposed above the conveyance path of the sheet SS. The table T is thus arranged by having one of its wall surfaces secured to the wall portion 104. The table T may be thus arranged by having one of its wall surfaces secured to any of the wall portions 103. Alternatively, the table T may be thus arranged using a supporting member that is disposed below the table T and on a portion of the upper surface of the bottom 102 where the sheet SS is not disposed. At least one of the robots 50 conveys the chemical container, tools, and other items onto the table T using the holding member 503 of the robot arm 502 when the sheet SS is conveyed.

The controller 60 is made up of a computer including an operator, a storage device, and an input device, and other devices, and is disposed outside the casing 10. The controller 60 is coupled to each robot 50, the motor 161, and other elements in a communicative manner, and controls the operation of each robot 50 (driving of each joint of the robot arm 502, driving of the holding device 503, and other driving) while at the same time controlling the driving of the motor 161.

The configuration of the adjustment system 1' is otherwise approximately similar to the adjustment system 1 according to the first embodiment, and thus will not be elaborated further here.

As has been described hereinbefore, in this embodiment, the robots 50 each including the robot arm 502 to perform adjusting work are disposed in the inner space 11 of the casing 10. Thus, the robots 50 perform the adjusting work in place of the operator. This, as a result, ensures that the operator is more reliably protected from toxic substances and other substances used in the adjusting work, which further improves safety.

Furthermore, this embodiment provides the following advantageous effects. When the sheet SS is conveyed, it is necessary to put away the chemical container, tools, and other items used in the adjusting work to positions where these items do not interfere with the conveyance of the sheet SS. In this embodiment, the table T is disposed above the conveyance path of the sheet SS in the movable range of the robot arm 502. When the sheet SS is conveyed, the robot arm 502 of the robot 50 conveys the chemical container, tools, and other items onto the table T; thus, these items are quickly put away. This ensures quick start of the conveyance work of the sheet SS.

It is to be noted that the second embodiment should not be construed in a limiting sense, and various modifications are possible without departing from the technical scope of the present invention.

### (3) Others

In the above-described embodiments, the sheet SS is conveyed from left to right over the bottom 102. This, however, should not be construed in a limiting sense. For example, the conveyer may convey the sheet SS from right to left over the bottom 102, or convey the sheet SS in the front and rear direction (direction from front to rear or direction from rear to front) over the bottom 102.

In the above-described embodiments, the engagement member CB is disposed at the distal end of the sheet SS, and is mounted to or detached from the roll core RW2 of the collection roll R2. This, however, should not be construed in a limiting sense. For example, an engagement portion may be provided at the roll core RW2 of the collection roll R2, and the distal end of the sheet SS may engage with the engagement member.

In the above-described embodiments, the rolls R1 and R2 are respectively the cartridges K1 and K2 respectively accommodated in the cases C1 and C2, and are respectively mounted to and detached from the cartridge mounting portions 109 and 110. This, however, should not be construed in a limiting sense. For example, at least one of the rolls R1 and R2 may be mounted to or detached from the casing 10 without being accommodated in the casing. The sheet SS will not be limited to the state of being wound into a roll to be mounted to the casing 10, and may be mounted to the casing 10 in a folded state or a stretched state, for example.

In the above-described embodiments, an absorbent sheet containing a water absorbing material is used as the sheet SS. This, however, should not be construed in a limiting sense. A sheet other than the absorbent sheet may be used as the sheet (examples including an adhesive sheet, a water repellant sheet, a heat resistant sheet, a water resistant sheet, an oil-proof sheet, a sheet of common paper) .

In the above-described embodiments, the work cabinet and the sheet have been described as being applied in the adjustment systems 1 and 1' to perform adjusting work for chemicals. The work cabinet and the sheet may be used in work other than the adjusting work for chemicals (examples including work such as an experiment using germs, and work of producing food products or industrial products using liquid, gas, or powder materials).

It is also noted that the flowchart shown in FIG. 6 should not be construed as limiting the flow of the operation performed in the first embodiment to the illustrated procedure. The procedure is open to addition and deletion, and the order is open to change without departing from the technical scope of the present invention.

Otherwise, the above-described embodiments and modification embodiment may be combined in any manner deemed suitable.

Obviously, numerous modifications and variations of the present disclosure are possible in light of the above teachings. It is therefore to be understood that within the scope of the appended claims, the present disclosure may be practiced otherwise than as specifically described herein.
- 1: Adjustment system
- 1': Adjustment system
- 2: Cabinet (work cabinet)
- 10: Casing
- 11: Inner space
- 13: Fan (airflow adjusting device)
- 15: Conveyer
- 16: Drive device
- 16': Drive device
- 105: Front wall surface (wall surface)
- 106: Opening
- 109: Supply cartridge mounting portion (first roll attached-detached portion)
- 110: Collection cartridge mounting portion (second roll attached-detached portion)
- C2: Case
- CB: Engagement member
- R1: Supply roll
- R2: Collection roll
- RW2: Roll core (roll core for winding)
- SS: Sheet

## Claims

1. A work cabinet (2), **characterized by**:
a casing (10);
an airflow adjuster (13) configured to adjust an airflow in an inner space (11) of the casing (10); and
a conveyer (15) disposed in the casing (10) and configured to convey a longitudinally continuous sheet (SS) so as to make the sheet (SS) pass below the inner space (11).

2. The work cabinet (2) according to claim 1, wherein the casing (10) comprises a wall surface (105) with an opening (106) for work.

3. The work cabinet (2) according to claim 1,
wherein the casing (10) comprises
a first roll attached-detached portion (109) to which and from which a supply roll (R1) to supply the sheet (SS) is attached and detached; and
a second roll attached-detached portion (110) to which and from which a collection roll (R2) to collect the sheet (SS) is attached and detached after the sheet (SS) has passed below the inner space (11), and
wherein the conveyer (15) is configured to draw the sheet (SS) from the supply roll (R1) and wind the sheet (SS) that has passed below the inner space (11) around the collection roll (R2).

4. The work cabinet (2) according to claim 3, wherein the conveyer (15) comprises a drive device (16) configured to rotate the collection roll (R2).

5. The work cabinet (2) according to claim 4,
wherein the collection roll (R2) is disposed in a case (C2), and
wherein the case (C2) is attached to and detached from the second roll attached-detached portion (110).

6. The work cabinet (2) according to any one of claims 1 to 5, further comprising a robot (50) disposed in the inner space (11) and comprising at least one robot arm (502) to perform work.

7. The work cabinet (2) according to claim 6, wherein the case (C2) comprises a table (T) disposed above a conveyance path of the sheet (SS) within a movable range of the at least one robot arm (502).

8. The work cabinet (2) according to any one of claims 1 to 7, wherein the airflow adjuster (13) is configured to maintain the inner space (11) under a negative pressure with respect to an outside of the casing (10).

9. A sheet (SS) configured to be wound into a roll to be mounted to the work cabinet (2) according to any one of claims 1 to 8.

10. The sheet (SS) according to claim 9, wherein the sheet (SS) comprises, at a distal end of the sheet (SS), an engagement member (CB) to be attached to and detached from a winding roll core (RW2).

11. The sheet (SS) according to claim 9 or 10, wherein the sheet (SS) comprises an absorbent sheet (SS) comprising a water absorbing material.
